# EUROPÄISCHE PATENTSCHRIFT

(11) **EP 3 484 192 B1**
(45) Veröffentlichungstag und Bekanntmachung des Hinweises auf die Patenterteilung: **03.03.2021**
(21) Anmeldenummer: 18198750.4
(22) Anmeldetag: 05.10.2018
(51) Int. Cl.: H04W 4/02, G01S 5/02

(54) **VERFAHREN UND ANORDNUNG ZUR ZUORDNUNG DER ORTSPOSITION AN EIN GERÄT**
METHOD AND SYSTEM FOR ALLOCATING THE LOCATION TO A DEVICE
MÉTHODE ET SYSTÈME D'ATTRIBUTION DE L'EMPLACEMENT À UN PÉRIPHÉRIQUE

(30) Priorität: 09.11.2017 DE 102017219910
(43) Veröffentlichungstag der Anmeldung: 15.05.2019
(73) Patentinhaber: Siemens Schweiz AG, 8047 Zürich (CH)
(72) Erfinder: Domeisen, Patrik, 8934 Knonau (CH); Zechlin, Oliver, 6300 Zug (CH)
(74) Vertreter: Maier, Daniel Oliver

(56) Entgegenhaltungen:
- EP-A1- 3 206 174
- DE-A1-102014 225 484
- US-A1- 2014 211 254

## Beschreibung

Die Erfindung betrifft ein Verfahren und eine Anordnung zur Zuordnung der Ortsposition an ein Gerät, insbesondere im Rahmen der Inbetriebsetzung des Gerätes.

Die Zahl der in Gebäuden verbauten Technik bzw. Geräte, z.B. Sensoren oder Aktoren jeglicher Art, nimmt zu. Das Problem dabei ist, dass die verbaute Technik meistens keine "position awareness" besitzt, d.h. die verbaute Technik bzw. die verbauten Geräte kann bzw. können den Ort an welchem sie sich in einem Gebäude befinden nicht an ein übergeordnetes System (z.B. Gebäudemanagementsystem, Leitsystem, Leitwarte), z.B. zur Inventarisierung, rückmelden.

Dies verursacht hohe Kosten und Aufwände, da diese Rückmeldung meist händisch erfolgen muss. Dabei wird von einem Servicetechniker die Position der Geräte, meist ungenau, manuell erfasst. Ist dieser Schritt erfolgt, mit dem Risiko dass dabei versehentlich falsche Daten erfasst wurden, weiss das übergeordnete System über den Verbauungsort der Geräte. Sollte es jedoch keinen Kommunikationskanal vom übergeordneten System an das verbaute Gerät geben, kennt dieses (z.B. Sensor, Aktor, Controller) jedoch die eigenen Positionsdaten noch immer nicht. Mangels dieser Information wird das Gerät u.U. weniger effizient arbeiten. Auch sind Wartung oder Fehlerbehebung am Gerät nicht effizient durchführbar, da der benötigte manuelle Abgleich zwischen einem Plan (Soll-Positionsdaten) und dem Gerät im Feld (Ist-Positionsdaten) immer fehlerbehaftet ist.

Die amerikanische Patentanmeldung US20140211254A1 offenbart ein tragbares Kommunikationsendgerät zur Auswahl eines Druckers zum Drucken gemäß der Position des Benutzers, umfassend Anzeigeeinheit und Prozessor, wobei das Endgerät Bereichsinformationen erfasst, die den Bereich einschließlich des Standorts der Drucker definieren.

Die europäische Patentanmeldung EP3206174A1 offenbart ein Verfahren und eine Anordnung zur Inbetriebnahme eines Gebäudeautomatisierungssystems für ein Gebäude, wobei ein im Gebäude verbautes oder zu verbauendes Gerät einen Identifizierungscode mit für das Gerät gerätespezifischen Daten umfasst, wobei der Identifizierungscode durch ein mobiles Kommunikationsendgerät eines Benutzers erfasst wird, wobei auf einem Display des mobilen Kommunikationsendgerätes ein Gebäudeplan für das Gebäude angezeigt wird, wobei durch eine Benutzer-eingabe am mobilen Kommunikationsendgerät eine Zuordnung des verbautes oder zu verbauenden Gerätes zu einem Ort des Gebäudeplanes und/oder zu anderen verbauten oder zu verbauenden Geräten im Gebäudeplan erfolgt, wobei die Zuordnung im Gebäudeautomatisierungssystem hinterlegt wird.

Die deutsche Patentanmeldung DE102014225484A1 offenbart eine Anordnung und Verfahren zur Positionsbestimmung von Objekten, insbesondere beweglichen Objekten, in Gebäuden oder definierten Bereichen für entsprechend autorisierte bzw. geschlossene Benutzergruppen.

Es ist daher die Aufgabe der vorliegenden Erfindung ein Verfahren bzw. eine Anordnung zur Zuordnung der Ortsposition an verbaute oder an zu verbauende Geräte bereitzustellen, wobei sichergestellt ist, dass jeweilige Soll-Positionsdaten und Ist-Positionsdaten der jeweiligen Geräte übereinstimmen.

Die Aufgabe wird gelöst durch ein Verfahren zur Zuordnung der Ortsposition an ein Gerät, insbesondere im Rahmen der Inbetriebsetzung des Gerätes, das Verfahren umfasst die folgenden Schritte:
Bestimmen der Ortsposition eines sich in räumlicher Nähe des Gerätes befindlichen mobilen Kommunikationsendgerätes durch ein Positionsbestimmungssystem;
Übermitteln der Ortsposition vom mobilen Kommunikationsendgerät (z.B. Smartphone, Tablet-Computer) an das Gerät. Heutzutage wird insbesondere in intelligenten Gebäuden (Smart Homes) verstärkt auf sog. "distributed wireless conntected devices" zurückgegriffen, d.h. auf nicht direkt miteinander verkabelte Geräte. So sind z.B. ein Lichtschalter und die dazugehörige Leuchte nur logisch miteinander verknüpft. Für die Programmierung der Beziehung Lichtschalter - Leuchte (Zuordnung; logische Verknüpfung) nach der Montage ist es wichtig dass diese Geräte sich auch dort befinden wo sie geplant waren. Speziell bei durch Funk angesteuerten Geräten (Funk-Devices) hat eine Ortsabweichung einen mehr oder minder grossen Einfluss auf die Funktionsqualität und Kommunikationsfähigkeit dieser Geräte. Wenn ein Gerät seine Ortsposition kennt, kann es leicht mit anderen zugeordneten Geräten kommunizieren und kooperieren. Mit Vorteil handelt es sich beim Positionsbestimmungssystem um ein Indoor-Positionsbestimmungssystem (z.B. WLAN, WLAN-ID des WLAN-Access Point, Bluetooth, IBeacons), welches sowieso schon im Gebäude installiert ist. Mobile Kommunikationsendgeräte mit entsprechenden Kommunikationsmechanismen sind heutzutage weitverbreitet bzw. lassen sich durch entsprechende Apps leicht nachrüsten.

Wenn ein in einem Gebäude verbautes oder zu verbauendes Gerät (z.B. Feldgerät, Controller) seine Ortsinformation kennt, d.h. den Ort, wo es im Gebäude sich befindet, kann es sich z.B. mit anderen Geräten im Gebäude verbinden (z.B. in ein mesh-Netzwerk integrieren). Weiterhin kann das Gerät in einem Fehlerfall oder bei einer benötigten Wartung die Ortsinformation einem Servicetechniker melden. Die erleichtert Fehlersuche und Wartung. Mit Vorteil wird einem Gerät seine Ortsinformation (bzw. sein Verbauungsort) während der Inbetriebnahme zugewiesen, bzw. übermittelt.

Eine erste vorteilhafte Ausgestaltung der Erfindung liegt darin, dass das Übermitteln der Ortsposition vom mobilen Kommunikationsendgerät an das Gerät nur erfolgt, wenn das Gerät als berechtigter Empfänger identifiziert wurde. Dies kann z.B. durch einen optischen Abgleich zwischen dem mobilen Kommunikationsendgerät und dem zu "impfenden" Gerät (d.h. dem Gerät, dem die Ortsposition mitgeteilt werden soll) erfolgen. Das mobile Kommunikationsendgerät kann z.B. durch einen entsprechenden QR-Code Scanner oder Barcode-Scanner einen entsprechende am Gerät angebrachte Markierung (z.B. QR Code oder Barcode) einlesen und überprüfen, ob es sich um ein berechtigtes Gerät handelt (richtiger Typ, richtige Produktlinie). Durch Zugriff auf das entsprechende Gebäudemodell (BIM-Modell) kann mit dem mobilen Kommunikationsendgerät überprüft werden, ob es sich beim Gerät um einen berechtigten Empfänger handelt.

Ein Gerät kann sich als berechtigt entweder direkt (z.B. Programmierknopf) oder via Hard- oder Software-"Mittelsmann" (z.B. dongle oder online-Service) identifizieren.

Eine weitere vorteilhafte Ausgestaltung der Erfindung liegt darin, dass die Identifikation als berechtigter Empfänger durch das Gerät erfolgt. Das entsprechende Gerät bzw. das entsprechende Produkt welches die Position übermittelt bekommen soll, kann seine Empfangsbereitschaft z.B. durch ein akustisches oder optisches Signal (z.B. blinkende LED am Gerät/Produkt). Die Empfangsbereitschaft kann auch durch eine entsprechende Statusmeldung dem mobilen Kommunikationsendgerät mitgeteilt werden. Z.B. via Funk- oder online-Verbindung innerhalb einer entsprechenden Software bzw. App, mit Vorteil auch mit Empfangsquittierung bzw. OK-Meldung.

Eine weitere vorteilhafte Ausgestaltung der Erfindung liegt darin, dass die Identifikation des Gerätes als berechtigter Empfänger durch das mobile Kommunikationsendgerät erfolgt. Das mobile Kommunikationsendgerät kann z.B. durch eine NFC-Verbindung (z.B. Bluetooth) das entsprechende Gerät auffordern sich als berechtigt zu identifizieren. Das Gerät kann z.B. ein entsprechendes akustisches oder optisches Signal ausgeben, oder eine Quittungsmeldung dem mobilen Kommunikationsendgerät antworten. Durch Zugriff auf das entsprechende Gebäudemodell (BIM-Modell) kann mit dem mobilen Kommunikationsendgerät überprüft werden, ob es sich beim Gerät um einen berechtigten Empfänger handelt.

Eine weitere vorteilhafte Ausgestaltung der Erfindung liegt darin, dass die Übermittlung der Ortsposition vom mobilen Kommunikationsendgerät an das Gerät über ein Drittgerät erfolgt. So können die Positionsdaten (Ortsposition) des mobilen Kommunikationsendgeräts von diesem an ein Prüfgerät oder Installationswerkzeug übertragen werden, welches wiederum die empfangene Position an das eigentliche Gerät bzw. Produkt überträgt. Dies ist besonders bei Brownfield-Projekten von Vorteil.

Eine weitere vorteilhafte Ausgestaltung der Erfindung liegt darin, dass es sich beim Drittgerät um eine Leitstelle, insbesondere eine Gebäudemanagementstation oder ein BIM-Server, handelt. Mit Vorteil überträgt das mobile Kommunikationsendgerät eine einem Gerät zugeordnete bzw. übermittelte Ortsposition auch an eine übergeordnete Stelle, wie z.B. Leitstelle, Gebäudemanagementsystem zur Ablage der Ortsinformation in einem Gebäudeinformationsmodell (BIM-Modell). Von der Leitstelle (z.B. Gebäudemanagementstation, BIM-Server, Gebäudemanagementsystem) kann die Ortsposition an das entsprechende Gerät weitergeleitet werden. Damit wird u.a. sichergestellt, dass die dem Gerät zugewiesene und übermittelte Ortsposition mit der entsprechenden im Gebäudeinformationsmodell (BIM-Modell) hinterlegten Ortsposition übereinstimmt.

Eine weitere vorteilhafte Ausgestaltung der Erfindung liegt darin, dass es sich beim Drittgerät um ein Gerät handelt, welches sich in unmittelbarer räumlicher Nähe des Gerätes befindet, insbesondere in einer Entfernung von weniger als 1m vom Gerät. Dies ist insbesondere dann von Vorteil, wenn das Gerät keine eigene Verbindung zum mobilen Kommunikationsendgerät aufbauen kann, wohl aber das in der Nähe des Gerätes befindliche Drittgerät. Mit Vorteil sind das Gerät und das Drittgerät durch ein Kommunikationsnetzwerk (z.B. Installationsbus oder mesh-Netzwerk) verbunden, worüber diese kommunizieren können. Bei einer geringen Entfernung, insbesondere bei einer Entfernung von weniger als 1m zwischen Gerät und Drittgerät, kann mit Vorteil eine Nahfeld-Kommunikation (NFC, Near Field Communication, z.B. RFID, Bluetooth) verwendet werden.

Eine weitere vorteilhafte Ausgestaltung der Erfindung liegt darin, dass das Übermitteln der Ortsposition vom mobilen Kommunikationsendgerät an das Gerät eine Signatur umfasst, die auf der Ortsposition und einem Identifikationscode (z.B. eindeutige ID) des Gerätes basiert. Dadurch wird ein sicheres Übermitteln der Ortsposition vom mobilen Kommunikationsendgerät an das Gerät gewährleistet. Eine digitale Signatur kann z.B. durch ein digitales Signaturverfahren (z.B. durch ein asymmetrisches Kryptosystem oder ein Public-Key-Kryptosystem) erstellt werden.

Eine weitere vorteilhafte Ausgestaltung der Erfindung liegt darin, dass das Verfahren weiterhin umfasst:
Abfragen einer geplanten Soll-Ortsposition des Gerätes aus einem in einer Datenbank hinterlegten Gebäudemodell (BIM, Gebäudeinformationsmodell) durch das mobile Kommunikationsendgerät;
wobei das Übermitteln der Ortsposition vom mobilen Kommunikationsendgerät an das Gerät nur erfolgt, wenn die vom Positionsbestimmungssystem ermittelte Ortsposition des sich in räumlicher Nähe des Gerätes befindlichen mobilen Kommunikationsendgerätes mit der geplanten Soll-Ortsposition übereinstimmt. Dadurch wird sichergestellt, dass die Soll-Ortsposition des Gerätes wie sie im Gebäudemodell (BIM, Gebäudeinformationsmodell) hinterlegt ist, mit der physikalischen Ortsposition des Gerätes im Feld (d.h. im Gebäude) übereinstimmt.

Die Soll-Zielposition des "zu impfenden" Gerätes (z.B. Rauchmelder) ist in einer Datenbank (z.B. BIM-Modell) hinterlegt. Diese Soll-Zielposition wird dem Kommunikationsendgerät übermittelt. Dies kann z.B. eine technische Zeichnung (CAD) sein. Stimmt die Soll-Zielposition mit der Ist-Zielposition überein oder weisen nur eine definierte Abweichung (z.B. eine Abweichung von höchstens 3 m, insbesondere höchstens 1 m) auf, wird diese hinterlegte Soll-Zielposition dem "zu impfenden" Gerät übermittelt.

Eine weitere vorteilhafte Ausgestaltung der Erfindung liegt in einer Anordnung eingerichtet zur Durchführung des erfindungsgemässen Verfahrens. Eine entsprechende Anordnung kann durch sowieso schon vorhandene Hardware- und Softwarekomponenten realisiert werden bzw. durch handelsübliche Komponenten (z.B. Smartphone, Server, Speicher, Kommunikationsmechanismen (z.B. WLAN, Internet) ausgestattet werden, um das erfindungsgemässe Verfahren zu realisieren.

Die Aufgabe wird weiterhin gelöst durch eine Anordnung zur Zuordnung der Ortsposition an ein Gerät, insbesondere im Rahmen der Inbetriebsetzung des Gerätes, wobei die Anordnung umfasst:
ein Positionsbestimmungssystem zum Bestimmen der Ortsposition eines sich in räumlicher Nähe des Gerätes befindlichen mobilen Kommunikationsendgerätes (z.B. Smartphone);
das mobile Kommunikationsendgerät, eingerichtet zum Übermitteln der Ortsposition an das Gerät,
   wobei das mobile Kommunikationsendgerät eingerichtet ist, dass das Übermitteln der Ortsposition vom mobilen Kommunikationsendgerät an das Gerät nur erfolgt, wenn das Gerät vor der Übermittlung als berechtigter Empfänger identifiziert worden ist. Die Anordnung kann durch sowieso schon vorhandene Hardware- und Softwarekomponenten realisiert werden bzw. eine vorhandene Infrastruktur kann durch handelsübliche Komponenten (z.B. Smartphone, Server, Speicher, Kommunikationsmechanismen (z.B. WLAN, Internet) zu einer entsprechenden Anordnung aufgerüstet werden.

Eine weitere vorteilhafte Ausgestaltung der Erfindung liegt darin, dass die Anordnung ein in einer Datenbank hinterlegtes Gebäudemodell (BIM, Gebäudeinformationsmodell) umfasst, in dem jeweilige Soll-Ortspositionen von verbauten oder zu verbauenden Geräten hinterlegt sind. Das mobile Kommunikationsendgerät kann durch entsprechende Kommunikationsverbindungen (z.B. Funk, WLAN, Internet) auf das Gebäudemodell zugreifen und z.B. Überprüfungen zwischen den im Gebäudemodell hinterlegten Solldaten und den im Feld vorliegenden Ist-Daten vornehmen.

Die Erfindung sowie vorteilhafte Ausführungen der vorliegenden Erfindung werden am Beispiel der nachfolgenden Figuren erläutert. Dabei zeigen:
- FIG 1: eine erste beispielhafte Anordnung zur Zuordnung der Ortsposition an ein Gerät, insbesondere im Rahmen der Inbetriebsetzung des Gerätes,
- FIG 2: eine zweite beispielhafte Anordnung zur Zuordnung der Ortsposition an ein Gerät, insbesondere im Rahmen der Inbetriebsetzung des Gerätes, und
- FIG 3: ein beispielhaftes Flussdiagramm für ein Verfahren zur Zuordnung der Ortsposition an ein Gerät, insbesondere im Rahmen der Inbetriebsetzung des Gerätes.

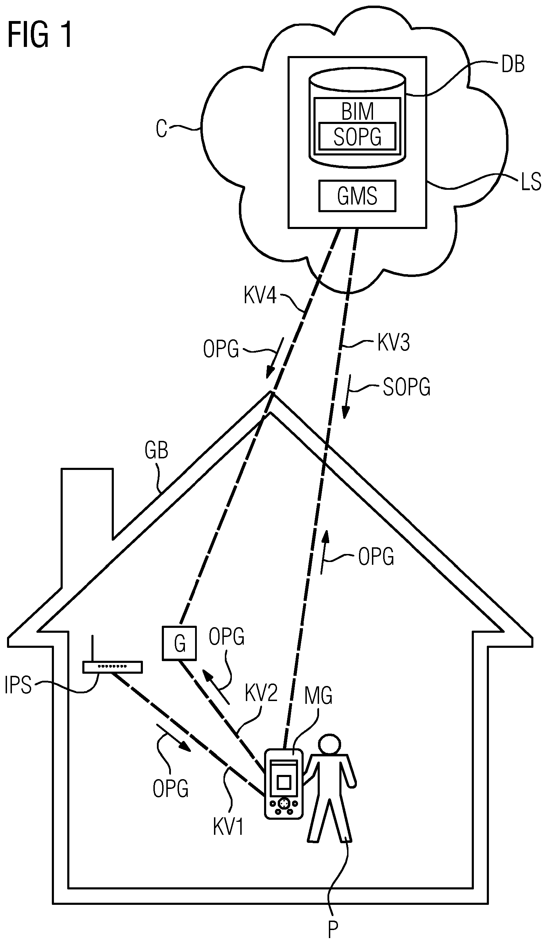

Figur 1 zeigt eine erste beispielhafte Anordnung zur Zuordnung der Ortsposition an ein Gerät G, insbesondere im Rahmen der Inbetriebsetzung des Gerätes G innerhalb eines Gebäudemanagementsystems GMS. Die erste beispielhafte Anordnung umfasst:
ein Positionsbestimmungssystem IPS zum Bestimmen der Ortsposition OPG eines sich in räumlicher Nähe des Gerätes G befindlichen mobilen Kommunikationsendgerätes MG; wobei das mobile Kommunikationsendgerät MG, eingerichtet zum Übermitteln der Ortsposition OPG an das Gerät G, und wobei das mobile Kommunikationsendgerät MG eingerichtet ist, dass das Übermitteln der Ortsposition OPG vom mobilen Kommunikationsendgerät MG an das Gerät G nur erfolgt, wenn das Gerät G vor der Übermittlung als berechtigter Empfänger identifiziert worden ist.

Mit Vorteil umfasst die erste beispielhafte Anordnung ein in einer Datenbank DB hinterlegtes Gebäudemodell BIM in dem jeweilige Soll-Ortspositionen SOPG von verbauten oder zu verbauenden Geräten G hinterlegt sind.

Bei der Person P handelt es sich z.B. um einen Servicetechniker, der beauftragt ist im Gebäude GB ein Gerät G, (z.B. Sensor, Aktor, Controller, Brandmelder, Thermostat, etc.) zu installieren.

Mit dem Positionsbestimmungssystem IPS wird die Ortsposition OPG des sich in räumlicher Nähe des Gerätes G befindlichen mobilen Kommunikationsendgerätes MG (z.B. Smartphone, Tablet-Computer) der Person P ermittelt. Beim Positionsbestimmungssystem IPS handelt es sich z.B. um ein Indoor-Positionsbestimmungssystem (WLAN, Bluetooth, IBeacon, etc.) oder um ein satellitengestütztes Positionsbestimmungssystem (z.B. GPS, Galileo). Dem mobilen Kommunikationsendgerät MG des Benutzers P wird über eine geeignete Kommunikationsverbindung KV1 die Ortsposition OPG übermittelt und mit Vorteil auf dem Display des mobilen Kommunikationsendgerätes MG angezeigt. Bei der Kommunikationsverbindung KV1 handelt es sich z.B. um eine Drahtlosverbindung (z.B. Funk, WLAN, Bluetooth, NFC (Near Field Communication)).

Das mobile Kommunikationsendgerät MG ist eingerichtet zum Übermitteln der Ortsposition OPG an das Gerät G über eine geeignete Kommunikationsverbindung KV2 (z.B. Funk, WLAN, Bluetooth, NFC (Near Field Communication)). Mit Vorteil übermittelt das mobile Kommunikationsendgerät MG die Ortsposition OPG an das Gerät G nur, wenn das Gerät G als berechtigter Empfänger identifiziert worden ist. Die Identifizierung des Gerätes G als berechtigter Empfänger der Ortsposition OPG kann z.B. über einen Abgleich der Gerätedaten mit entsprechenden Daten zum Gerät, die im Gebäudemodell BIM hinterlegt sind erfolgen. Das mobile Kommunikationsendgerät MG kann z.B. durch einen entsprechenden QR-Code Scanner oder Barcode-Scanner einen entsprechende am Gerät angebrachte Markierung (z.B. QR Code oder Barcode) einlesen und überprüfen, ob es sich um ein berechtigtes Gerät G handelt (richtiger Typ, richtige Produktlinie). Durch Zugriff auf das entsprechende Gebäudemodell (BIM-Modell) kann mit dem mobilen Kommunikationsendgerät MG überprüft werden, ob es sich beim Gerät G um einen berechtigten Empfänger handelt. Das mobile Kommunikationsendgerät MG (z.B. Smartphone, Tablet-Computer) ist dabei über eine geeignete Kommunikationsverbindung KV3 (z.B. drahtlose Funkverbindung oder satellitengestützte Verbindung) mit der Leitstelle LS verbunden. Mit Vorteil umfasst das Übermitteln der Ortsposition OPG vom mobilen Kommunikationsendgerät MG an das Gerät G eine Signatur, die auf der Ortsposition OPG und einem Identifikationscode (z.B. eindeutige ID) des Gerätes basiert.

Mit Vorteil umfasst die Leitstelle LS ein Gebäudemanagementsystem GMS, welches Zugriff auf eine Datenbank DB hat, worin das Gebäudemodell BIM des Gebäudes GB hinterlegt ist. Das Leitsystem LS umfasst einen leistungsfähigen und entsprechend eingerichteten Server für den Betrieb des Gebäudemanagementsystems GMS. Bei der Datenbank DB kann es sich z.B. um eine In-Memory Datenbank oder eine relationale Datenbank handeln. Das Gebäudemodell BIM ist in einer geeigneten Notation beschrieben und in der Datenbank DB hinterlegt. Mit Vorteil ist das Leitsystem LS in einer Cloud-Infrastruktur C realisiert.

Mit Vorteil erfolgt die Identifikation als berechtigter Empfänger durch das Gerät G.

Die Identifikation des Gerätes G als berechtigter Empfänger kann auch durch das mobile Kommunikationsendgerät MG erfolgen oder in einer Kollaboration von Gerät G, dem mobilen Kommunikationsendgerät MG und der Leitstelle LS.

Die Übermittlung der Ortsposition OPG vom mobilen Kommunikationsendgerät MG an das Gerät G kann in einer direkten Verbindung KV2 zwischen dem mobilen Kommunikationsendgerät MG und dem Gerät G (z.B. Aktor, Sensor, Controller) erfolgen, oder auch indirekt über ein Drittgerät. Beim Drittgerät kann es sich z.B. um die Leitstelle LS, insbesondere eine Gebäudemanagementstation oder ein BIM-Server, handeln. Das mobile Kommunikationsendgerät MG kann die Ortsposition OPG an die Leitstelle LS übertragen, zum Eintragen in das Gebäudemodell BIM. Die Leitstelle LS kann die erhaltene Ortsposition OPG (d.h. die Ist-Ortsposition) mit einer im Gebäudemodell BIM hinterlegten Soll-Ortsposition SOPG abgleichen und bei Abweichungen z.B. eine entsprechende Meldung an einen Gebäudebetreiber oder Facility-Manager absetzen. Die Leitstelle LS kann über eine geeignete Kommunikationsverbindung KV4 (z.B. drahtlose Funkverbindung) die Ortsposition OPG an das Gerät G übermitteln. Mit Vorteil findet vor der Übermittlung ein Abgleich zwischen der entsprechenden Soll-Ortsposition SOPG und der Ortsposition OPG statt.

Mit Vorteil erfolgt ein Abfragen einer geplanten Soll-Ortsposition SOPG des Gerätes G aus einem in einer Datenbank DB hinterlegten Gebäudemodell BIM durch das mobile Kommunikationsendgerät MG, insbesondere nach einer Aufforderung (on demand) des mobile Kommunikationsendgerätes MG; wobei ein Übermitteln der Ortsposition OPG vom mobilen Kommunikationsendgerät MG an das Gerät G nur erfolgt, wenn die vom Positionsbestimmungssystem IPS ermittelte Ortsposition OPG des sich in räumlicher Nähe des Gerätes G befindlichen mobilen Kommunikationsendgerätes MG mit der geplanten Soll-Ortsposition SOPG übereinstimmt. Der Abgleich der Soll-Ortsposition SOPG mit der vom Positionsbestimmungssystem IPS ermittelten Ortsposition OPG (d.h. der Ist-Ortsposition) kann durch ein entsprechend eingerichtetes mobiles Kommunikationsendgerät MG oder durch entsprechende Mechanismen der Leitstelle LS bzw. des Gebäudemanagementsystems GMS erfolgen.

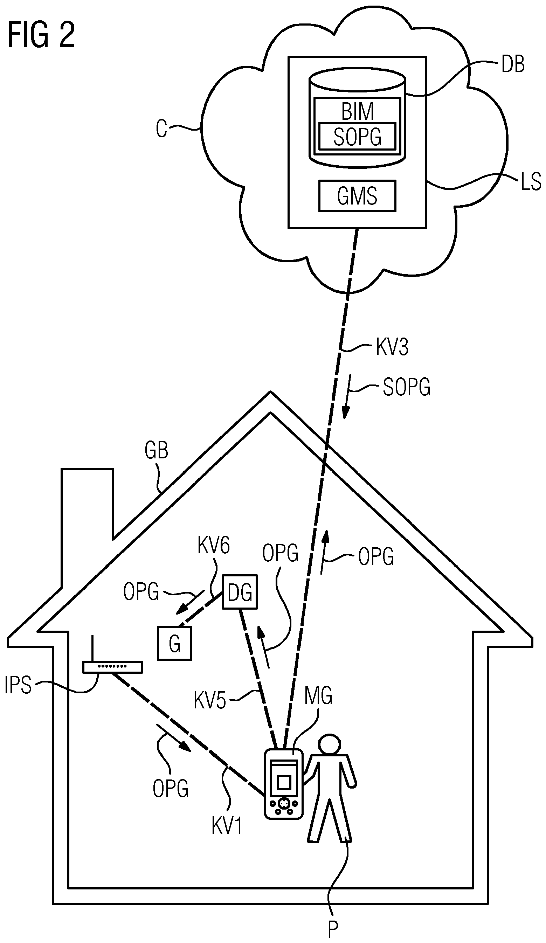

Figur 2 zeigt eine zweite beispielhafte Anordnung zur Zuordnung der Ortsposition OPG an ein Gerät G (z.B. Feldgerät, Aktor, Sensor, Controller), insbesondere im Rahmen der Inbetriebsetzung des Gerätes G für ein Gebäudemanagementsystem GMS. Die beispielhafte Anordnung gemäss Figur 2 umfasst ein Positionsbestimmungssystem IPS zum Bestimmen der Ortsposition OPG eines sich in räumlicher Nähe des Gerätes G befindlichen mobilen Kommunikationsendgerätes MG; wobei das mobile Kommunikationsendgerät MG, eingerichtet zum Übermitteln der Ortsposition OPG an das Gerät G, und wobei das mobile Kommunikationsendgerät MG eingerichtet ist, dass das Übermitteln der Ortsposition OPG vom mobilen Kommunikationsendgerät MG an das Gerät G nur erfolgt, wenn das Gerät G vor der Übermittlung als berechtigter Empfänger identifiziert worden ist.

Mit dem Positionsbestimmungssystem IPS wird die Ortsposition OPG des sich in räumlicher Nähe des Gerätes G befindlichen mobilen Kommunikationsendgerätes MG (z.B. Smartphone, Tablet-Computer) der Person P ermittelt. Beim Positionsbestimmungssystem IPS handelt es sich z.B. um ein Indoor-Positionsbestimmungssystem (WLAN, Bluetooth, IBeacon, etc.) oder um ein satellitengestütztes Positionsbestimmungssystem (z.B. GPS, Galileo). Dem mobilen Kommunikationsendgerät MG des Benutzers P wird über eine geeignete Kommunikationsverbindung KV1 die Ortsposition OPG übermittelt und mit Vorteil auf dem Display des mobilen Kommunikationsendgerätes MG angezeigt. Bei der Kommunikationsverbindung KV1 handelt es sich z.B. um eine Drahtlosverbindung (z.B. Funk, WLAN, Bluetooth, NFC (Near Field Communication)).

Mit Vorteil umfasst die beispielhafte Anordnung gemäss Figur 2 ein in einer Datenbank DB hinterlegtes Gebäudemodell BIM in dem jeweilige Soll-Ortspositionen SOPG von verbauten oder zu verbauenden Geräten G hinterlegt sind. Die Datenbank DB ist z.B. Bestandteil eines Gebäudemanagementsystems GMS bzw. einer Leitstelle LS.

Die Identifizierung des Gerätes G als berechtigter Empfänger der Ortsposition OPG kann z.B. über einen Abgleich der Gerätedaten mit entsprechenden Daten zum Gerät G, die im Gebäudemodell BIM hinterlegt sind erfolgen. Das mobile Kommunikationsendgerät MG kann z.B. durch einen entsprechenden QR-Code Scanner oder Barcode-Scanner einen entsprechende am Gerät angebrachte Markierung (z.B. QR Code oder Barcode) einlesen und überprüfen, ob es sich um ein berechtigtes Gerät G handelt (richtiger Typ, richtige Produktlinie). Durch Zugriff auf das entsprechende Gebäudemodell (BIM-Modell) kann mit dem mobilen Kommunikationsendgerät MG überprüft werden, ob es sich beim Gerät G um einen berechtigten Empfänger handelt. Das mobile Kommunikationsendgerät MG (z.B. Smartphone, Tablet-Computer) ist dabei über eine geeignete Kommunikationsverbindung KV3 (z.B. drahtlose Funkverbindung oder satellitengestützte Verbindung) mit der Leitstelle LS verbunden.

Die Übermittlung der Ortsposition OPG vom mobilen Kommunikationsendgerät MG an das Gerät G kann auch über ein Drittgerät DG (z.B. ein Prüfgerät) erfolgen. Mit Vorteil handelt es sich beim Drittgerät DG um ein Gerät, welches sich in unmittelbarer räumlicher Nähe des Gerätes G befindet, insbesondere in einer Entfernung von weniger als 1m vom Gerät G. Diese indirekte Übermittlung der Ortsposition OPG vom mobilen Kommunikationsendgerät MG an das Gerät G ist insbesondere in solchen Fällen sinnvoll, bei denen keine direkte oder keine ausreichende Verbindung zwischen dem Gerät G und dem mobilen Kommunikationsendgerät MG (z.B. Smartphone) besteht oder herstellbar ist. In solchen Fällen wird die Ortsposition OPG vom mobilen Kommunikationsendgerät MG in einem ersten Schritt an das Drittgerät DG (z.B. ein Prüfgerät oder ein geeignetes weiteres Feldgerät (z.B. Brandmelder, Thermostat)) und vom Drittgerät DG weiter an das Gerät G übertragen, über geeignete Kommunikationsverbindungen KV5, KV6. Bei den Kommunikationsverbindungen KV5, KV6 handelt es sich mit Vorteil um drahtlose Verbindungen (z.B. Funkverbindungen).

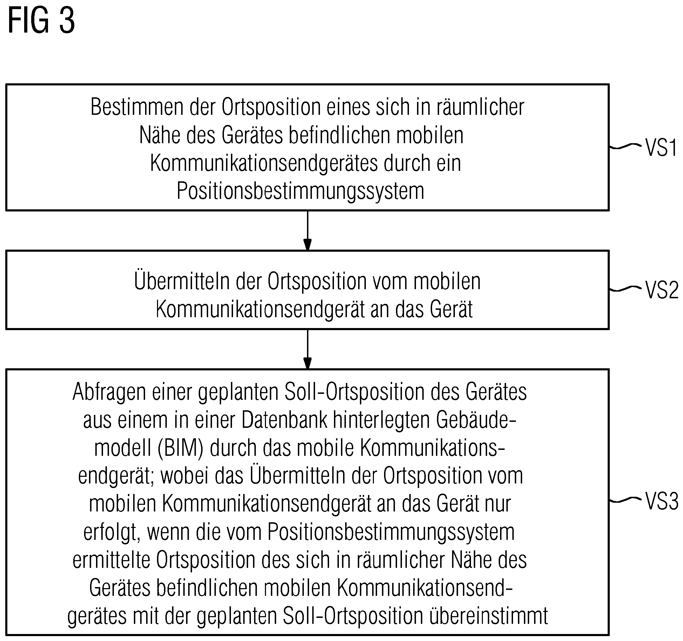

Figur 3 zeigt ein beispielhaftes Flussdiagramm für ein Verfahren zur Zuordnung der Ortsposition an ein Gerät (z.B. Feldgerät für die Gebäudeautomatisierung; Aktor, Sensor, Controller), insbesondere im Rahmen der Inbetriebsetzung des Gerätes. Das Verfahren umfasst die folgenden Schritte:
(VS1) Bestimmen der Ortsposition eines sich in räumlicher Nähe des Gerätes befindlichen mobilen Kommunikationsendgerätes (z.B. Smartphone, Tablet-Computer) durch ein Positionsbestimmungssystem (z.B. Satelliten gestütztes Positionsbestimmungssystem (z.B. GPS, Galileo) und/oder Indoor- Positionsbestimmungssystem (z.B. WLAN, BLE, IBeacons); und
(VS2) Übermitteln der Ortsposition vom mobilen Kommunikationsendgerät an das Gerät.

Optional umfasst das Verfahren weiterhin den Schritt:
(VS3) Abfragen einer geplanten Soll-Ortsposition des Gerätes aus einem in einer Datenbank hinterlegten Gebäudemodell (z.B. Gebäudeinformationsmodell, BIM) durch das mobile Kommunikationsendgerät; wobei das Übermitteln der Ortsposition vom mobilen Kommunikationsendgerät an das Gerät nur erfolgt, wenn die vom Positionsbestimmungssystem ermittelte Ortsposition des sich in räumlicher Nähe des Gerätes befindlichen mobilen Kommunikationsendgerätes mit der geplanten Soll-Ortsposition übereinstimmt.

Ein entsprechendes Verfahren kann durch sowieso schon in einem Gebäude bzw. im Rahmen einer Gebäudeautomatisierung vorhandene Hardware- und Softwarekomponenten realisiert werden. Auch ist es leicht möglich ein Gebäude oder eine Gebäudeautomatisierung durch handelsübliche Komponenten (z.B. Smartphone, Server, Speicher, Kommunikationsmechanismen (z.B. WLAN, Internet) auszustatten oder aufzurüsten, um das erfindungsgemässe Verfahren zu realisieren. Mit Vorteil wird das Verfahren durch eine Cloud-Infrastruktur realisiert. So kann z.B. eine Gebäudeleitstelle in einer Rechner-Cloud realisiert werden mit entsprechender Hardware, Software und Kommunikationsmechanismen (Internet, WLAN, Server, Datenbank für BIM, etc.) für eine Kommunikation ins Feld bzw. in das Gebäude. Die Gebäudeleitstelle umfasst mit Vorteil ein Gebäudemanagementsystem, welches die Einträge und den Zugriff auf das Gebäudeinformationsmodell pflegt bzw. überwacht.

Mit Vorteil erfolgt das Übermitteln der Ortsposition vom mobilen Kommunikationsendgerät an das Gerät nur, wenn das Gerät als berechtigter Empfänger identifiziert wurde. Dies kann z.B. durch Abgleich der Daten am physikalischen Gerät (z.B. Seriennummer, Typ, etc.) mit den entsprechenden im BIM-Modell hinterlegten Daten erfolgen. Das BIM-Modell kann z.B. auf Industry Foundation Classes (IFC) basieren oder einer anderen entsprechenden Notation.

Die Identifikation als berechtigter Empfänger kann durch das Gerät erfolgen oder durch das mobile Kommunikationsendgerät, z.B. durch entsprechende Überprüfungen und Abgleiche mit entsprechenden Einträgen im BIM-Modell.

Die Übermittlung der Ortsposition vom mobilen Kommunikationsendgerät an das Gerät kann indirekt über ein Drittgerät (z.B. Server in der Cloud oder über ein Prüfgerät im Feld) erfolgen. Es kann sich beim Drittgerät um eine Leitstelle, insbesondere eine Gebäudemanagementstation oder einen BIM-Server handeln. Es kann sich beim Drittgerät auch um ein Gerät handeln, welches sich in unmittelbarer räumlicher Nähe des Gerätes befindet, insbesondere in einer Entfernung von weniger als 1m vom Gerät.

Mit Vorteil umfasst das Übermitteln der Ortsposition vom mobilen Kommunikationsendgerät an das Gerät eine Signatur, die auf der Ortsposition und einem Identifikationscode (z.B. eindeutige ID) des Gerätes basiert. Dies erhöht die Sicherheit der Übermittlung, insbesondere wird ein Man-in-the-middle-Angriff (MITM-Angriff) erschwert bzw. verhindert.

Ein Aspekt der vorliegenden Erfindung ist die Nutzung der "position awareness" eines mobilen Kommunikationsendgerätes (z.B. Smartphone eines Servicetechnikers). Durch Nutzung der "position awareness" eines mobilen Kommunikationsendgerätes wird die erkannte bzw. bekannte Position des Kommunikationsendgerätes an ein Gerät oder Produkt (z.B. Gebäudetechnik-Sensor) weitergegeben bzw. programmiert. Diese Ortsposition (dann Geräte/Produkt-Position) kann, ohne dass ein Kommunikationskanals zwischen Produkt/Gerät und "System" (z.B. Gebäudemanagementsoftware, Gebäudemanagementsystem) bestehen muss, optional weiterhin durch das Kommunikationsendgerät an das "System" übermittelt werden.

Ein Kommunikationsendgerät, z.B. Smartphone, erkennt seine Position. Diese Positionserkennung erfolgt z.B. via GPS, Indoor Navigationsinfrastruktur, kamerabasierter Umfelderkennung (Abgleich Kamera-Bild mit Bild-Datenbank der Umgebung) oder Pointcloud-matching, mit Vorteil aus Kombination diverser Informationen ("sensor fusion"). Dabei wird eine Koordinate, mit Vorteil inklusive Z-Achse, (z.B. via Barometer, bekannten Bauplänen (Deckenhöhe), Erdmagnetfeld, Funksignalauswertung, etc.), festgestellt bzw. festgelegt. Dies kann z.B. ein auf Standards basierter Wert (z.B. ID-Wert sein, z.B. WGS84- oder UTM-Koordinate (World Geodetic System 1984Universal Transverse Mercator) sein, oder aber z.B. eine ortspezifische ID (Identifikation) bei der eine Gebäudeecke als Nullpunkt definiert wird.

Im nächsten Schritt wird dem Gerät/Produkt (z.B. ein Sensor) diese Positionskoordinate übermittelt. Optional gibt das Gerät/Produkt welches die Position übermittelt bekommen soll seine Empfangsbereitschaft kund (akustisches oder optisches Signal; oder als Statusmeldung via Funk- oder online-Verbindung innerhalb eines Softwaresystems (z.B. App)). Optional auch mit Empfangsquittierung bzw. OK-Meldung.

Mit Vorteil identifizieren sich die Geräte/Produkte als berechtigt; entweder direkt (z.B. Programmierknopf; oder via Hard- oder Software-"Mittelsmann" (dongle; online-Service); z.B. durch einen optischen Abgleich (z.B. durch QR- oder BarCode Einlesen)).

### Möglicher Ablauf:

a) Position des mobilen Kommunikationsgerätes bestimmen bzw. bestimmen lassen;
b) Identifizierung des zu "impfenden" Geräte bzw. Produktes (d.h. Identifizierung des Gerätes bzw. Produktes dem die Ortsposition übermittelt werden soll);
c) Übermittlung der bestimmten Position an das Gerät/Produkt;
d) Übermittlung der "geimpften" Position an Management-Ebene (d.h. Übermittlung der dem Gerät/Produkt übermittelten Ortsposition an eine übergeordnete Management-Ebene (z.B. Gebäudeleitstelle, Gebäudemanagementsystem, Gebäudekontrollstation).

### Mehrere exemplarische Wege des Positionsimpfens (d.h. des Übermitteln der Ortsposition an das Gerät/Produkt) bieten sich an:

- Mittels drahtloser Nahfeldkommunikation; z.B. NFC oder Bluetooth mit geringer Signalstärke: dabei wird das Kommunikationsendgerät auf das zu "impfende" Gerät/Produkt gehalten und die Position (Ortsposition) übertragen bzw. programmiert. Dies ist ein sehr sicherer Weg, da die "Funkbrücke" nicht kompromittiert werden kann.
- Mittels Funktechnologie mit grösserer Reichweite, wie z.B. Bluetooth, WiFi, LTE; dabei ist keine Berührung zwischen Kommunikationsendgerät und Gerät/Produkt notwendig.
- Mittels mechanischer Kontaktierung (z.B. Stecker-/Buchse).
- Mittels Programmierung durch "das System" (backend; z.B. Managementstation): Dieses hat vor der Übertragung an das Gerät/Produkt (z.B. Gebäudetechnik-Sensor) die Position des Kommunikationsendgerätes (und damit des Produktes zum Zeitpunkt der Übertragung) erhalten. Dabei wird mittels drahtgebundener oder drahtloser Verbindung eine Verbindung vom "System" (z.B. Gebäudemanagementsystem) zum Gerät/Produkt x oder einem zweiten Gerät/Produkt y+1, welches eine Kommunikationsmöglichkeit zum Produkt x hat, aufgebaut und die Position (Ortsposition) von Gerät/Produkt x übermittelt. Erfolgt die Positionsübermittlung an y+1, überträgt diese im Nachgang die Position an x (kaskadierende Übertragung), bzw. und/oder verwaltet die Position von x selbst (z.B. als Master in einem mesh-Netzwerk). Weiterhin könnte die Position eines neuen oder zusätzlichen Produktes/Gerätes auf Grund der Position von bereits vorhandenen Produkten/Geräten bestimmt, bzw. abgeschätzt werden.

### Vorteile der vorliegenden Erfindung sind insbesondere

- Effizienteres Commissioning (Inbetriebsetzung von Feldgeräten in Gebäuden);
- Verringerung der Fehlerwahrscheinlichkeit beim Erfassen von Geräten/Produkten (human error);
- Mehrwert durch "position-awareness" (z.B. logische oder positionsbezogene "awareness" (Wahrnehmung, Berücksichtigung) oder durch Funktions-Cluster);
- Prozess (des Positionsimpfens, d.h. des Übertragens der Position) kann in automatisierten bzw. teilautomatisierten Schritten ablaufen (z.B. Positionsdaten eines Kommunikationsendgerätes werden an ein Prüfgerät oder Installationswerkzeug übertragen, welches wiederum die empfangene Position an das eigentliche Produkt überträgt; dies ist besonders im Brown-approach (Berücksichtigung von vorhandenen Strukturen) von Vorteil);
- Im Backend (Server; Cloud; optional auch lokal am Gerät des Technikers am Einsatzort) kann eine Inventarisierung des Produktes und dessen Position erfolgen. Dies kann z.B. ein Managementsystem sein, eine beliebige Datenbank oder ein BIM-konformes Gebäudetool. Sollte sich die Position des Produktes ändern, kann die dort erfasste Position nach erneuter Übertragung, dynamisch angepasst werden.
- Das Gerät/Produkt kann sein "Wissen" um dessen Position mit z.B. anderen in der Nähe befindlichen Geräten bzw. Produkten teilen und positionsspezifische Erkenntnisse/Fähigkeiten austauschen (geopositions-logic-cluster). Ein Beispiel wäre die Einflussnahme auf das positionsgerechte Raumklima;
- Die Position kann verschlüsselt werden, so dass nur product-owner die Position auslesen/nutzen können. So verfügbar, können der reinen Position im backend semantische Information zum Umfeld hinzugefügt werden (z.B. "Besprechungsraum"; "abgehängte Decke"; Umfeldsensoren x y z.
- "Sanity Check", d.h. Plausibilitätsprüfungen sind möglich: wird eine (neue) Position eines Gerätes übermittelt, kann auf Seiten der Management-Software festgestellt werden ob diese Position
   a) realistisch (d.h. nicht fehlerbehaftet) ist und/oder
   b) logisch sinnvoll oder machbar ist (d.h. ein Sensor arbeitet z.B. nur im Verbund mit den im direkten Umfeld befindlichen Sensoren sinnvoll; ist dieser Sensor in einer solchen Umgebung?);
- Kostenersparnis und Produktivitätssteigerung im Service (z.B. Fehlersuche und bei Inbetriebnahme)
- Datenqualität des Digital Twins steigt (BIM);
- Spezifischere und genauere Bereitstellung von Datenpunktinformationen für Backend-Systeme, z.B. für eine Cloud-Plattform.

Verfahren und Anordnung zur Zuordnung der Ortsposition an ein Gerät, insbesondere im Rahmen der Inbetriebsetzung des Gerätes (z.B. Feldgerät, Aktor, Sensor), wobei durch ein Positionsbestimmungssystem die Ortsposition eines sich in räumlicher Nähe des Gerätes befindlichen mobilen Kommunikationsendgerätes bestimmt wird; wobei das mobile Kommunikationsendgerät (z.B. Smartphone) eingerichtet ist zum Übermitteln der Ortsposition an das Gerät, und wobei das mobile Kommunikationsendgerät weiterhin eingerichtet ist, dass das Übermitteln der Ortsposition vom mobilen Kommunikationsendgerät an das Gerät nur erfolgt, wenn das Gerät vor der Übermittlung als berechtigter Empfänger identifiziert worden ist.

### Bezugszeichen

- IPS: Positionsbestimmungssystem
- GB: Gebäude
- GMS: Gebäudemanagementsystem
- DB: Datenbank
- LS: Leitstelle
- MG: Mobiles Gerät
- OPG: Ortsposition
- SOPG: Soll-Ortsposition
- BIM: Gebäudemodell
- P: Person
- KV1 - KV6: Kommunikationsverbindung
- C: Cloud
- G: Gerät
- DG: Drittgerät
- VS1 - VS3: Verfahrensschritt

## Patentansprüche

1. Verfahren zur Zuordnung der Ortsposition (OPG) an ein Gerät (G), insbesondere im Rahmen der Inbetriebsetzung des Gerätes (G), das Verfahren umfassend die folgenden Schritte:
(VS1) Bestimmen der Ortsposition (OPG) eines sich in räumlicher Nähe des Gerätes (G) befindlichen mobilen Kommunikationsendgerätes (MG) durch ein Positionsbestimmungssystem (IPS) ;
(VS2) Übermitteln der Ortsposition (OPG) vom mobilen Kommunikationsendgerät (MG) an das Gerät (G), wobei
die Übermittlung der Ortsposition (OPG) vom mobilen Kommunikationsendgerät (MG) an das Gerät (G) über ein Drittgerät (DG) erfolgt;
(VS3) Abfragen einer geplanten Soll-Ortsposition (SOPG) des Gerätes (G) aus einem in einer Datenbank (DB) hinterlegten Gebäudemodell (BIM) durch das mobile Kommunikationsendgerät (MG);
wobei das Übermitteln der Ortsposition (OPG) vom mobilen Kommunikationsendgerät (MG) an das Gerät (G) nur erfolgt, wenn die vom Positionsbestimmungssystem (IPS) ermittelte Ortsposition (OPG) des sich in räumlicher Nähe des Gerätes (G) befindlichen mobilen Kommunikationsendgerätes (MG) mit der geplanten Soll-Ortsposition (SOPG) übereinstimmt.

2. Verfahren nach Anspruch 1, wobei das Übermitteln der Ortsposition (OPG) vom mobilen Kommunikationsendgerät (MG) an das Gerät nur erfolgt, wenn das Gerät (G) als berechtigter Empfänger identifiziert wurde.

3. Verfahren nach Anspruch 2, wobei die Identifikation als berechtigter Empfänger durch das Gerät (G) erfolgt.

4. Verfahren nach Anspruch 2 oder 3, wobei die Identifikation des Gerätes (G) als berechtigter Empfänger durch das mobile Kommunikationsendgerät (MG) erfolgt.

5. Verfahren nach einem der vorstehenden Ansprüche, wobei es sich beim Drittgerät um eine Leitstelle (LS), insbesondere eine Gebäudemanagementstation oder ein BIM-Server, handelt.

6. Verfahren nach einem der vorstehenden Ansprüche, wobei es sich beim Drittgerät (DG) um ein Gerät handelt, welches sich in unmittelbarer räumlicher Nähe des Gerätes (G) befindet, insbesondere in einer Entfernung von weniger als 1m vom Gerät (G) .

7. Verfahren nach einem der vorstehenden Ansprüche, wobei das Übermitteln der Ortsposition (OPG) vom mobilen Kommunikationsendgerät (MG) an das Gerät (G) eine Signatur umfasst, die auf der Ortsposition (OPG) und einem Identifikationscode des Gerätes (G) basiert.

8. Anordnung zur Zuordnung der Ortsposition (OPG) an ein Gerät (G), insbesondere im Rahmen der Inbetriebsetzung des Gerätes (G), wobei die Anordnung umfasst:
ein Positionsbestimmungssystem (IPS) zum Bestimmen der Ortsposition (OPG) eines sich in räumlicher Nähe des Gerätes (G) befindlichen mobilen Kommunikationsendgerätes (MG);
das mobile Kommunikationsendgerät (MG), eingerichtet zum Übermitteln der Ortsposition (OPG) an das Gerät (G),
wobei das mobile Kommunikationsendgerät (MG) eingerichtet ist, dass das Übermitteln der Ortsposition (OPG) vom mobilen Kommunikationsendgerät (MG) an das Gerät (G) nur erfolgt, wenn das Gerät (G) vor der Übermittlung als berechtigter Empfänger identifiziert worden ist, und
ein Drittgerät, das eingerichtet ist, die Ortsposition (OPG) vom mobilen Kommunikationsendgerät (MG) zu empfangen und an das Gerät (G) zu übermitteln,
wobei ein in einer Datenbank (DB) hinterlegtes Gebäudemodell (BIM) in dem jeweilige Soll-Ortspositionen (SOPG) von verbauten oder zu verbauenden Geräten (G) hinterlegt sind.

## Claims

1. Method for assigning the spatial position (OPG) to a device (G), in particular in the context of the commissioning of the device (G), the method comprising the following steps:
(VS1) Determining the spatial position (OPG) of a mobile communication terminal (MG) located in the spatial vicinity of the device (G) by way of a positioning system (IPS);
(VS2) Transmitting the spatial position (OPG) from the mobile communication terminal (MG) to the device (G), wherein
the transmission of the spatial position (OPG) from the mobile communication terminal (MG) to the device (G) takes place via a third device (DG);
(VS3) Querying a planned setpoint spatial position (SOPG) of the device (G) from a building model (BIM) recorded in a database (DB) by way of the mobile communication terminal (MG) ;
wherein the transmission of the spatial position (OPG) from the mobile communication terminal (MG) to the device (G) only takes place when the spatial position (OPG), ascertained by the positioning system (IPS), of the mobile communication terminal (MG) located in the spatial vicinity of the device (G) matches the planned setpoint spatial position (SOPG).

2. Method according to claim 1, wherein the transmission of the spatial position (OPG) from the mobile communication terminal (MG) to the device only takes place when the device (G) has been identified as an authorised receiver.

3. Method according to claim 2, wherein the identification as an authorised receiver takes place by way of the device (G).

4. Method according to claim 2 or 3, wherein the identification of the device (G) as an authorised receiver takes place by way of the mobile communication terminal (MG).

5. Method according to one of the preceding claims, wherein the third device is a control centre (LS), in particular a building management station or a BIM server.

6. Method according to one of the preceding claims, wherein the third device (DG) is a device which is located in the immediate vicinity of the device (G), in particular at a distance of less than 1 m from the device (G).

7. Method according to one of the preceding claims, wherein the transmission of the spatial position (OPG) from the mobile communication terminal (MG) to the device (G) comprises a signature, which is based on the spatial position (OPG) and an identification code of the device (G).

8. Arrangement for assigning the spatial position (OPG) to a device (G), in particular in the context of the commissioning of the device (G), wherein the arrangement comprises:
a positioning system (IPS) for determining the spatial position (OPG) of a mobile communication terminal (MG) located in the spatial vicinity of the device (G);
the mobile communication terminal (MG), configured for transmitting the spatial position (OPG) to the device (G),
wherein the mobile communication terminal (MG) is configured such that the transmission of the spatial position (OPG) from the mobile communication terminal (MG) to the device (G) only takes place when the device (G) has been identified as an authorised receiver prior to transmission, and
a third device, which is configured to receive the spatial position (OPG) from the mobile communication terminal (MG) and transmit it to the device (G),
wherein a building model (BIM) recorded in a database (DB), in which respective setpoint spatial positions (SOPG) of devices (G) which are installed or are to be installed are recorded.

## Revendications

1. Procédé d'attribution de l'emplacement (OPG) à un appareil (G), en particulier dans le cadre de la mise en service de l'appareil (G), le procédé comprenant les étapes suivantes :
(VS1) détermination de l'emplacement (OPG) d'un terminal de communication mobile (MG) situé à proximité spatiale de l'appareil (G) par un système de détermination d'emplacement(IPS) ;
(VS2) transmission de l'emplacement (OPG) du terminal de communication mobile (MG) à l'appareil (G), la transmission de l'emplacement (OPG) du terminal de communication mobile (MG) à l'appareil (G) se faisant via un appareil tiers (DG) ;
(VS3) interrogation, par le terminal de communication mobile (MG), d'un emplacement de consigne prévu (SOPG) de l'appareil (G) à partir d'un modèle de bâtiment (BIM) déposé dans une base de données (DB),
la transmission de l'emplacement (OPG) du terminal de communication mobile (MG) à l'appareil (G) n'ayant lieu que si l'emplacement (OPG) du terminal de communication mobile (MG) situé à proximité spatiale de l'appareil (G) déterminée par le système de détermination d'emplacement (IPS) coïncide avec l'emplacement de consigne prévu (SOPG).

2. Procédé selon la revendication 1, la transmission de l'emplacement (OPG) du terminal de communication mobile (MG) à l'appareil n'ayant lieu que si l'appareil (G) a été identifié comme récepteur autorisé.

3. Procédé selon la revendication 2, l'identification en tant que récepteur autorisé étant effectuée par l'appareil (G).

4. Procédé selon la revendication 2 ou 3, l'identification de l'appareil (G) en tant que récepteur autorisé étant effectuée par le terminal de communication mobile (MG).

5. Procédé selon l'une des revendications précédentes, l'appareil tiers étant un poste de contrôle (LS), et plus particulièrement une station de gestion de bâtiment ou un serveur BIM.

6. Procédé selon l'une des revendications précédentes, l'appareil tiers (DG) étant un appareil qui se trouve à proximité spatiale immédiate de l'appareil (G), et plus particulièrement à une distance inférieure à 1 m de l'appareil (G).

7. Procédé selon l'une des revendications précédentes, la transmission de l'emplacement (OPG) du terminal de communication mobile (MG) à l'appareil (G) incluant une signature qui se base sur l'emplacement (OPG) et sur un code d'identification de l'appareil (G).

8. Agencement pour attribuer l'emplacement (OPG) à un appareil (G), en particulier dans le cadre de la mise en service de l'appareil (G), l'agencement comprenant :
un système de détermination d'emplacement (IPS) pour déterminer l'emplacement (OPG) d'un terminal de communication mobile (MG) situé à proximité spatiale de l'appareil (G) ;
le terminal de communication mobile (MG) configuré pour transmettre l'emplacement (OPG) à l'appareil (G), le terminal de communication mobile (MG) étant configuré de telle sorte que la transmission de l'emplacement(OPG) du terminal de communication mobile (MG) à l'appareil (G) n'a lieu que si l'appareil (G) a été identifié comme récepteur autorisé avant la transmission et
un appareil tiers qui est configuré pour recevoir l'emplacement (OPG) du terminal de communication mobile (MG) et le transmettre à l'appareil (G),
un modèle de bâtiment (BIM) déposé dans une base de données (DB), dans lequel sont déposés des emplacements de consigne respectives (SOPG) d'appareils montés ou à monter.
